# EUROPEAN PATENT SPECIFICATION

(11) **EP 4 039 417 B1**
(45) Date of publication and mention of the grant of the patent: **20.08.2025**
(21) Application number: 20872462.5
(22) Date of filing: 28.08.2020
(51) Int. Cl.: B25F 5/00, B25F 5/02, H01M 10/0562, H01M 10/0585, H01M 50/20

(54) **ELECTRIC TOOL AND BATTERY PACK**
ELEKTROWERKZEUG UND BATTERIEPACK
OUTIL ÉLECTRIQUE ET BLOC-BATTERIE

(30) Priority: 30.09.2019 JP 2019179573
(43) Date of publication of application: 10.08.2022
(73) Proprietor: Panasonic Intellectual Property Management Co., Ltd., Osaka-shi, Osaka 540-6207 (JP)
(72) Inventor: MURUI, Itaru, Osaka-shi, Osaka 540-6207 (JP)
(74) Representative: Müller-Boré & Partner Patentanwälte PartG mbB
(86) International application number: PCT/JP2020/032518
(87) International publication number: WO 2021/065270

(56) References cited:
- EP-B1- 2 062 310
- WO-A1-2019/013032
- JP-A- 2017 147 028
- JP-A- 2018 183 874
- US-A1- 2017 326 720
- US-A1- 2019 252 728

## Description

### Technical Field

The present disclosure generally relates to an electric tool and a battery pack, and more particularly relates to an electric tool powered by a battery and a battery pack.

### Background Art

Patent Literature 1 discloses a rotary tool as a type of electric tool. The housing of this rotary tool is made up of: a cylinder portion that houses a motor and a driving unit to be driven in rotation by the motor; and a grip portion provided to protrude from the cylinder portion. A battery pack serving as a power supply for the rotary tool is attached to the grip portion.

The rotary tool may be put on a floor surface or the ground to stand by itself thereon with its battery pack facing down. However, putting the rotary tool violently onto the floor surface or the ground could apply impact to the battery pack. If the rotary tool is handled in such a careless manner frequently, then the application of the impact to the battery pack could cause leakage of liquid from a lithium-ion battery used in the battery pack and other inconveniences.
US2017/326720 A1 describes a power tool, such as an impact driver, including a motor housing that houses a motor, and a battery-mount part to which a battery pack having a rated voltage of 18 V is mountable. A ratio of the maximum width of the motor housing to the maximum width of the battery pack is 0.75 or less. A forward/reverse-switching lever is slidable in a left-right direction to change the rotational direction of the motor and is disposed between the motor housing and the battery pack. A maximum-slide position of the forward/reverse-switching lever in the left-right direction is inward of a ground plane when the power tool is laid horizontally on its side on the ground plane.
US2019/252728 A1 describes a solid battery including at least one first laminate body in which a first electrolyte layer, a first positive electrode layer, a first current collecting layer, and a second positive electrode layer are laminated in this order; at least one second laminate body in which a second electrolyte layer, a first negative electrode layer, a second current collecting layer, and a second negative electrode layer are laminated in this order; a first insulating layer connected to at least part of a side surface portion of the first laminate body; and a second insulating layer connected to at least part of a side surface portion of the second laminate body. Each of the first current collecting layer and the second current collecting layer has ionic conductivity of 10-7 S/cm or lower, and each of the first insulating layer and the second insulating layer has ionic conductivity of 10-7 S/cm or lower.

### Citation List

### Patent Literature

Patent Literature 1: JP 2005-169532 A

### Summary of Invention

An object of the present disclosure is to provide an electric tool that may reduce the chances of causing inconvenience to its battery pack and a battery pack for use in such an electric tool.

The claimed invention is defined by the features set forth in the appended independent claim. Particular embodiments are set forth in the dependent claims.

### Brief Description of Drawings

FIG. 1 is a side view of an electric tool according to an exemplary embodiment of the present disclosure;
FIG. 2 illustrates a state where the electric tool is used;
FIG. 3 is a side view illustrating a state where a battery pack is yet to be attached to a grip portion of the electric tool;
FIG. 4 is a perspective view of a main part of the electric tool;
FIG. 5 illustrates a state where the electric tool is used;
FIG. 6 is a perspective view of a battery pack included in the electric tool; and
FIG. 7 is a side view of another battery pack included in the electric tool.

### Description of Embodiments

### (Embodiment)

### (1) Overview

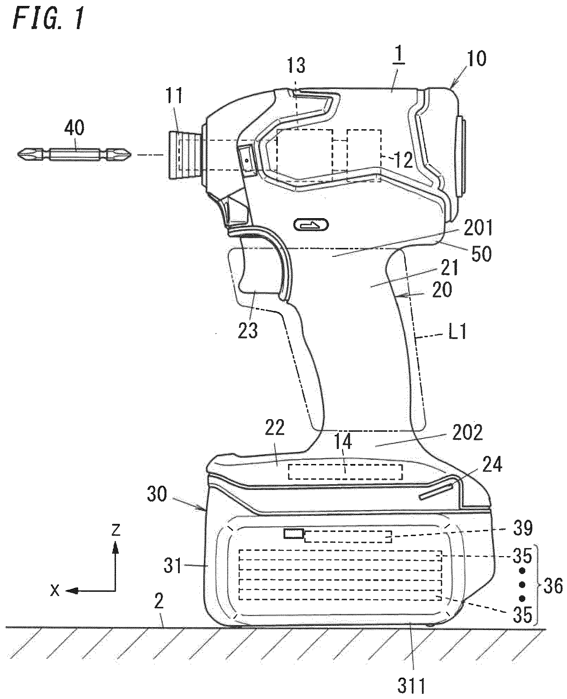

An electric tool 1 according to an exemplary embodiment is a handheld electric tool as shown in FIGS. 1-3. The electric tool 1 may be implemented as, for example, an electric screwdriver, an electric drill, an electric wrench, or an electric grinder.

The electric tool 1 according to this embodiment includes a body portion 10, a grip portion 20, and a battery pack 30.

The body portion 10 includes: a tool attachment member 11 to which a tool 40 is attached; a driving unit 12 to drive the tool 40; and a transmission unit 13 to transmit the driving force of the driving unit 12 to the tool 40.

The grip portion 20 includes a gripping part 21 designed to be held by a user with his or her hand 110.

The battery pack 30 supplies power to the driving unit 12.

Out of two end portions 201, 202, interposing the gripping part 21 between them, of the grip portion 20, the body portion 10 is connected to one end portion 201 and the battery pack 30 is attached to the other end portion 202.

The electric tool 1 in its entirety, including the body portion 10, the grip portion 20, and the battery pack 30, may stand by itself with a bottom surface 311, opposite from the grip portion 20, of the battery pack 30 put on a mounting surface (such as the ground 2).

The battery pack 30 includes a plurality of all-solid-state batteries 35, each of which is formed in a sheet shape.

The plurality of all-solid-state batteries 35 are stacked one on top of another.

The electric tool 1 according to this embodiment may stand by itself in its entirety with the bottom surface 311 of the battery pack 30 put on the mounting surface. Thus, putting the electric tool 1 violently onto the mounting surface with the battery pack 30 facing down could apply impact to the battery pack 30. In this embodiment, the battery pack 30 includes all-solid-state batteries 35 with higher impact resistance than a liquid battery such as a lithium-ion battery. This may reduce, even if impact is applied to the battery pack 30, the chances of causing abnormality to the battery pack 30. Thus, an electric tool 1 that may reduce the risk of causing damage may be provided. In the following description of this exemplary embodiment, an electric tool 1 of the shape in which out of two end portions 201, 202 of the grip portion 20, one end portion 201 is connected to the body portion 10 and the battery pack 30 is attached to the other end portion 202 (i.e., a so-called "gun type" electric tool 1) will be described.

The battery pack 30 included in the electric tool 1 includes a battery case 31 to house the all-solid-state batteries 35 therein.

The battery pack 30 includes all-solid-state batteries 35. This may reduce the chances of causing abnormality such as liquid leakage to the battery pack 30, compared to a situation where a liquid battery is used. Thus, a battery pack 30 that may reduce the chances of causing inconveniences to itself is provided.

### (2) Details

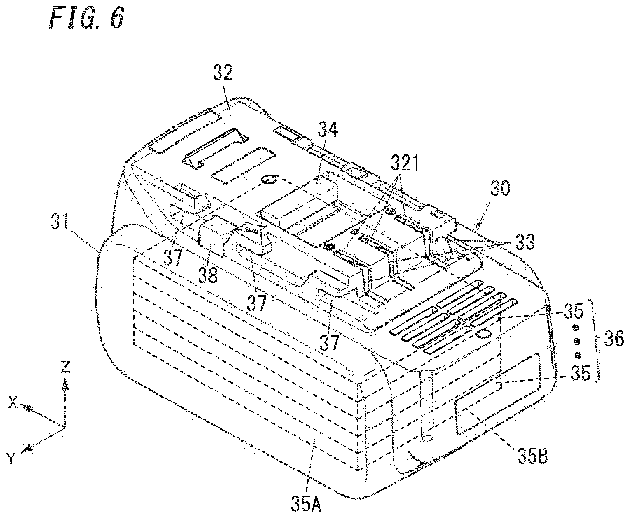

Next, the configuration of an electric tool according to an exemplary embodiment will be described in detail with reference to FIGS. 1-7. Note that the numerical values, shapes, materials, positions of constituent elements, relative positions between the constituent elements, their connection, and other specifics to be described below are all examples and should not be construed as limiting the scope of the present disclosure. The drawings to be referred to in the following description of embodiments are all schematic representations. That is to say, the ratio of the dimensions (including thicknesses) of respective constituent elements illustrated on the drawings does not always reflect their actual dimensional ratio. Also, in the following description, the X-axis direction and Z-axis direction shown in FIGS. 1, 3, and 6 will define the forward/backward direction and upward/downward direction, respectively, and the Y-axis direction shown in FIG. 6 will define the rightward/leftward direction. More specifically, the positive X-axis direction will define the forward direction, the positive Y-axis direction will define the rightward direction, and the positive Z-axis direction will define the upward direction. However, these directions are only examples and should not be construed as limiting the direction in which the electric tool 1 is used. Furthermore, the arrows shown on the drawings to indicate the respective directions are just given there as an assistant to description and are insubstantial ones.

The electric tool 1 includes the body portion 10, the grip portion 20, and the battery pack 30 as shown in FIGS. 1-7. In this embodiment, the body portion 10 and the grip portion 20 are provided integrally with each other and a tool body 50 is made up of the body portion 10 and the grip portion 20.

### (2.1) Tool body

First, the tool body 50 made up of the body portion 10 and the grip portion 20 will be described.

The body portion 10 may be, for example, a molded product of a synthetic resin with electrical insulation properties. The body portion 10 is formed in the shape of a cylinder extending in the forward/backward direction.

At the frontend of the body portion 10, provided is the tool attachment member 11, to which a tool 40 such as a tip tool is attached. Inside the body portion 10, housed are the driving unit 12 and the transmission unit 13 described above.

The tool attachment member 11 is provided for the body portion 10 to be rotatable around a rotational axis aligned with the forward/backward direction. Multiple different types of tools 40 are provided for various types of machining work to be done using this electric tool 1. Any desired one of the tools 40 may be selectively attached to the tool attachment member 11 and used to have an intended type of machining work done. Examples of such types of tools 40 include a screwdriver bit for fastening a screw, a drill bit for drilling a hole, and a socket for fastening a nut.

The driving unit 12 includes an electric motor to be driven with the electric power supplied from the battery pack 30.

The transmission unit 13 transmits the driving force of the driving unit 12 to the tool attachment member 11. The transmission unit 13 is coupled to an output shaft of the driving unit 12 and transmits the rotational force of the driving unit 12 to the tool attachment member 11, thereby rotating the tool attachment member 11. Optionally, the transmission unit 13 may include a speed reducer mechanism, a clutch mechanism, and an impact mechanism, for example.

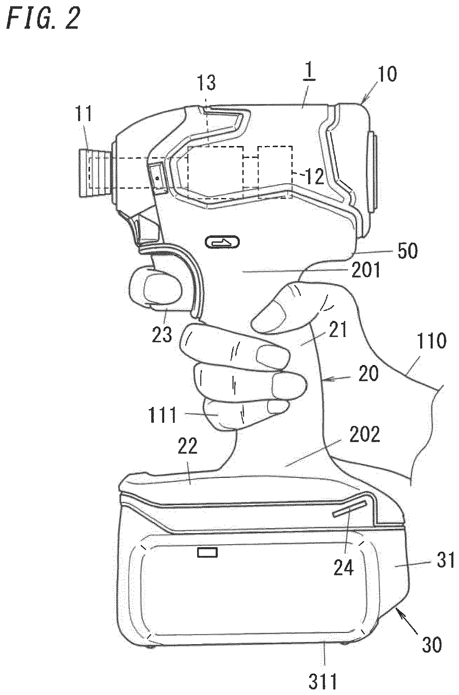

The grip portion 20 extends downward from a part of the peripheral surface of the body portion 10. The longitudinal axis of the grip portion 20 is aligned with the upward/downward direction. At the middle of the grip portion 20 in the upward/downward direction (at the middle of its length), provided is the gripping part 21 to be held by the user with his or her hand 110 (see FIG. 2). The part surrounded with the two-dot chain L1 (see FIG. 1) of the grip portion 20 is the gripping part 21. The grip portion 20 includes two end portions 201, 202, the upper one 201 of which is located opposite from the lower one 202 with respect to the gripping part 21. The upper end portion 201 is connected to the body portion 10. At the lower end portion 202, provided is a battery attachment portion 22 to which the battery pack 30 is attached.

A trigger 23 is provided on a front portion of the gripping part 21 of the grip portion 20 to be located adjacent to the end portion 201 connected to the body portion 10. The trigger 23 is an operating member that accepts an operating command entered by the user to control the rotation of the driving unit 12. The trigger 23 is operated by the user with the index finger, for example, of his or her hand 110 holding the grip portion 20.

The battery attachment portion 22 is provided integrally with the lower end portion 202 of the grip portion 20. The battery attachment portion 22 is formed to protrude perpendicularly to the upward/downward direction from the lower end portion 202 of the grip portion 20. The battery attachment portion 22 is formed in the shape of a box, of which the dimension in the upward/downward direction is smaller than its dimension in the forward/backward direction and its dimension in the rightward/leftward direction. To the bottom of the battery attachment portion 22, the battery pack 30 is attached removably. The lower surface of the battery attachment portion 22 is provided with a recess into which an upper portion of the battery pack 30 is inserted.

In this embodiment, a control unit 14 (see FIG. 1), including a circuit board on which a circuit for controlling the driving unit 12 and other components are mounted, is housed inside the battery attachment portion 22. In response to the operation of pulling the trigger 23, the control unit 14 may switch the ON/OFF states of the driving unit 12. In addition, according to the manipulative variable of the operation of pulling the trigger 23 (i.e., depending on how deep the trigger 23 has been pulled), the control unit 14 also controls the rotational velocity of the driving unit 12 (i.e., the rotational velocity of the tool 40 attached to the tool attachment member 11).

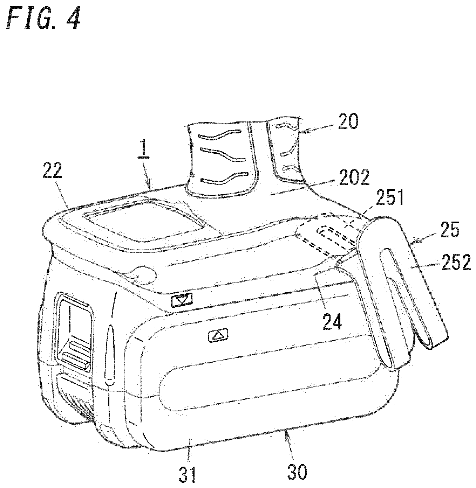

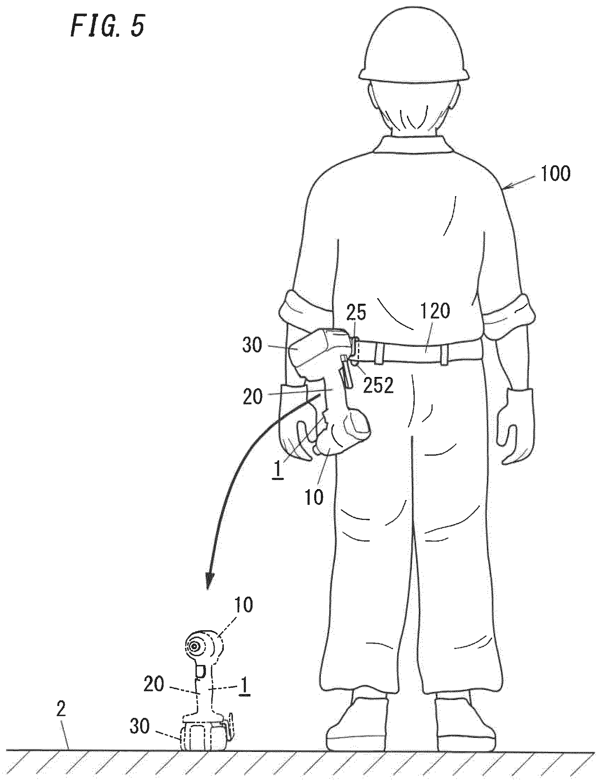

In addition, a suspension fitting 25 (see FIG. 4) for use to suspend the electric tool 1 from, for example, a working belt 120 (see FIG. 5) of the user 100 of the electric tool 1 is attached to the battery attachment portion 22. The suspension fitting 25 includes a fixing portion 251 to be inserted into a hole 24 provided through a side surface of the battery attachment portion 22 and fixed thereto with a screw, for example, and a U-hook 252, one end portion of which is coupled to the fixing portion 251. Hooking the hook 252 on his or her working belt 120, for example, allows the user 100 to move or do some type of work other than the machining work that requires the use of the electric tool 1 while suspending the electric tool 1 from the working belt 120.

In this embodiment, the suspension fitting 25 is provided for the grip portion 20. Alternatively, the suspension fitting 25 may be attached to the body portion 10. That is to say, the electric tool 1 may further include the suspension fitting 25 which is attached to at least one of the body portion 10 or the grip portion 20 to suspend the electric tool 1 from an object. This allows the electric tool 1 to be held suspended from the object.

### (2.2) Battery pack

The battery pack 30 serving as a power supply for the electric tool 1 will be described with reference to FIGS. 1-7.

The battery pack 30 serves as a power supply that allows the electric tool 1 to operate. The battery pack 30 includes the power storage unit 36 including the all-solid-state batteries 35 and the battery case 31 to house the power storage unit 36 therein. The battery case 31 is a molded product of a synthetic resin having electrical insulation properties and is formed in the shape of a box.

In the upper part of the battery case 31, a rectangular parallelepiped fitting portion 32, which is raised by one step with respect to right and left side portions, is provided along a centerline in the rightward/leftward direction as shown in FIG. 6. At the frontend of the fitting portion 32, three slits 321 are provided to be spaced apart from each other in the rightward/leftward direction. Each slit 321 is provided through the front and upper surfaces of the fitting portion 32 and extends in the forward/backward direction. Inside each slit 321, provided is a connection terminal portion 33 to be electrically connected to a feeder connection terminal provided in a lower part of the grip portion 20. Each connection terminal portion 33 is electrically connected to the power storage unit 36 housed inside the battery case 31. In addition, on the upper surface of the fitting portion 32, provided is a second connector 34 to be electrically connected to a first connector for transmitting signals, which is provided in a lower part of the grip portion 20. The second connector 34 is electrically connected to, for example, a circuit board 39 (see FIG. 1) housed inside the battery case 31. The circuit board 39 acquires battery information about the battery pack 30 (such as the voltage value and temperature of the power storage unit 36) and outputs the battery information to the control unit 14 provided inside the battery attachment portion 22. In addition, the right and left side surfaces of the fitting portion 32 have a plurality of insert grooves 37, to which a plurality of hook pieces 26 (see FIG. 4) provided inside a recess on the lower surface of the battery attachment portion 22 are respectively inserted.

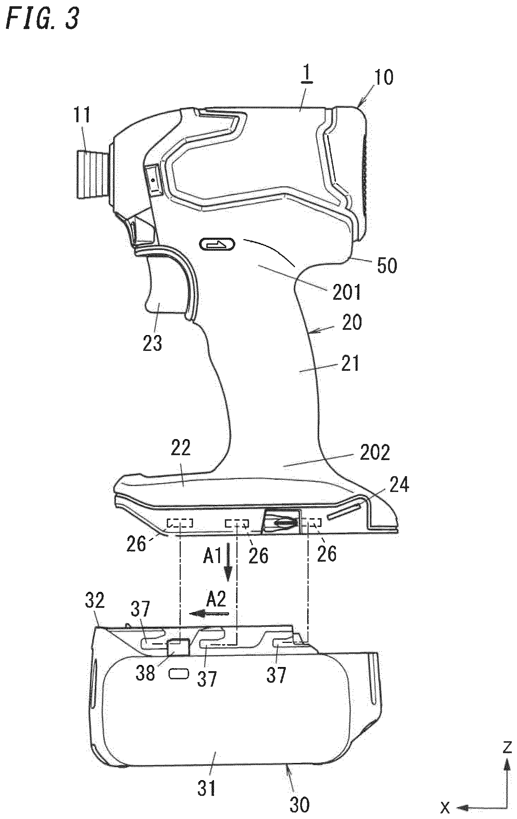

In this embodiment, to attach the battery pack 30 to the battery attachment portion 22, the tool body 50 is moved downward (as indicated by the arrow A1 in FIG. 3) from over the battery pack 30 as shown in FIG. 3, thereby inserting the fitting portion 32 of the battery pack 30 into the recess on the lower surface of the battery attachment portion 22. Thereafter, sliding the tool body 50 forward (as indicated by the arrow A2 in FIG. 3) with respect to the battery pack 30 allows the hook pieces 26 of the battery attachment portion 22 to be inserted into the insert grooves 37. A lock piece 38 is disposed behind the frontmost one of the plurality of insert grooves 37. The lock piece 38 is biased upward by an elastic member such as a spring. When the battery pack 30 is attached to the battery attachment portion 22, the lock piece 38 is pressed downward by the hook piece 26, thus allowing the hook piece 26 to move inside the insert groove 37. Thereafter, when the hook piece 26 reaches the deepest part of the insert groove 37, the lock piece 38 is pressed by the spring to move upward and reach the vicinity of the rear opening of the insert groove 37. As a result, attempting to slide the tool body 50 backward with respect to the battery pack 30 brings the hook piece 26 inserted into the front insert groove 37 into contact with the lock piece 38, thus regulating the backward slide of the tool body 50. This allows the battery pack 30 to be kept attached to the battery attachment portion 22.

As can be seen, according to this embodiment, the battery pack 30 is attached to the grip portion 20 by sliding the battery pack 30 in the slide direction (X-axis direction) aligned with the bottom surface 311 of the battery pack 30. That is to say, when the user 100 holds the grip portion 20 such that the longitudinal axis of the grip portion 20 is aligned with the upward/downward direction, the slide direction of the battery pack 30 will be aligned with the direction perpendicular to the upward/downward direction that is the direction of gravity. This reduces the risk of the gravitational force applied to the battery pack 30 causing the battery pack 30 to move in the slide direction, thus reducing the chances of the battery pack 30 disengaging itself from the grip portion 20.

Note that in a state where the battery pack 30 is attached to the battery attachment portion 22, the connection terminal portion 33 is electrically connected to the connection terminals of the battery attachment portion 22 and power required for operation is supplied from the power storage unit 36 to the control unit 14, the driving unit 12, and other components. In addition, the second connector 34 is electrically connected to the first connector of the battery attachment portion 22, the circuit board 39 housed in the battery case 31 and the control unit 14 are also electrically connected to each other, and the battery information is output from the circuit board 39 to the control unit 14.

On the other hand, to remove the battery pack 30 from the battery attachment portion 22, an operating member provided for the battery case 31 is operated to move the lock piece 38 downward and make the hook pieces 26 ready to move out of the insert grooves 37. In this state, the tool body 50 is slid backward (i.e., in the direction opposite from the one indicated by the arrow A2 in FIG. 3) with respect to the battery pack 30 to move the hook pieces 26 out of the insert grooves 37. Then, moving the tool body 50 upward (i.e., in the direction opposite from the one indicated by the arrow A1 in FIG. 3) with respect to the battery pack 30 makes the battery pack 30 removable from the tool body 50.

As can be seen, according to this embodiment, the battery pack 30 is attachable to, and removable from, the grip portion 20 (of the tool body 50). Thus, when the battery level of the battery pack 30 becomes low, the user just needs to remove the battery pack 30 from the grip portion 20 and attach a charged battery pack 30 as a replacement to the grip portion 20. This allows the user to continue his or her machining work using the electric tool 1.

Furthermore, the battery pack 30 is attached to the end portion 202 of the grip portion 20 which is located adjacent to the little finger 111 of the user 100 who grips the grip portion 20 as shown in FIG. 2. Thus, the end portion 201, located adjacent to the thumb of the user 100, of the grip portion 20 is connected to the body portion 10, thus achieving the advantage of allowing the user 100 to focus on the target more easily with his or her eyes while he or she is doing machining work with the tool 40 brought into contact with the workpiece.

The power storage unit 36 is made up of a plurality of all-solid-state batteries 35, each of which is formed in a sheet shape as shown in FIGS. 1 and 6. The plurality of all-solid-state batteries 35 are connected in either series or parallel according to the voltage or capacity required. In this embodiment, the power storage unit 36 includes five all-solid-state batteries 35 which are connected together in series. However, the number and connection mode (which is either series or parallel) of the all-solid-state batteries 35 that form the power storage unit 36 may be changed as appropriate according to the voltage or capacity required.

In this embodiment, the respective weights of the body portion 10 and the battery pack 30 are set such that the center of mass of the electric tool 1 is located in the grip portion 20. Recently, as electric motors have had their size reduced and their output increased, attempts have been made to reduce the weight of the body portion 10 that houses the driving unit 12. Meanwhile, there have been increasing demands for increasing the capacity of the battery pack 30 to extend the maximum operating hours. As the capacity of the battery pack 30 has been increased to meet such demands, the battery pack 30 tends to increase its weight. In this manner, as the battery pack 30 increases its weight while the battery pack 30 has its weight reduced, the center of mass of the electric tool 1 could shift toward the battery pack 30. If the center of mass of the electric tool 1 is located in the vicinity of the battery pack 30, the reaction applied to the hand 110 of the user who is holding the grip portion 20 during the machining work increases. In this embodiment, the power storage unit 36 includes the all-solid-state battery 35 which is lighter in weight than a liquid battery such as a lithium-ion battery, thus reducing an increase in the weight of the battery pack 30 while contributing to increasing the capacity, compared to a situation where the power storage unit 36 includes a liquid battery. This enables, even when the capacity of the battery pack 30 is increased, keeping the center of mass of the electric tool 1 located in the gripping part 21 of the grip portion 20 and thereby reducing the reaction applied to the hand of the user who is holding the grip portion 20 during the machining work, thus contributing to increasing the handiness of the electric tool 1.

In this case, if impact force is applied to the power storage unit 36 perpendicularly to the direction in which the all-solid-state batteries 35 are stacked one on top of another, then peeling or misalignment will occur between the plurality of all-solid-state batteries 35 that are stacked one on top of another, thus possibly causing instability in electrical connection between the plurality of all-solid-state batteries 35. On the other hand, if impact force is applied to the power storage unit 36 in the direction in which the all-solid-state batteries 35 are stacked one on top of another, then peeling or misalignment will hardly occur between the plurality of all-solid-state batteries 35 that are stacked one on top of another, thus reducing the chances of causing instability in electrical connection between the plurality of all-solid-state batteries 35. In this embodiment, the direction in which the plurality of all-solid-state batteries 35 are stacked one on top of another is aligned with the line segment that connects together the two end portions 201, 202, interposing the gripping part 21 between them, of the grip portion 20 (i.e., the Z-axis direction). This reduces the damage to be done to the power storage unit 36 by the impact applied to the power storage unit 36 in the direction aligned with the Z-axis direction.

Furthermore, in this embodiment, the direction in which the plurality of all-solid-state batteries 35 are stacked one on top of another is aligned with a direction perpendicular to the bottom surface 311 of the battery pack 30. As used herein, the "direction perpendicular to the bottom surface 311" refers to the direction perpendicular to the mounting surface (e.g., the ground surface 2) on which the electric tool 1 is mounted (i.e., the upward/downward direction) and is the Z-axis direction shown in FIG. 1. Therefore, if the electric tool 1 is put with impetus onto the mounting surface, then impact force is applied in the direction in which the plurality of all-solid-state batteries 35 are stacked one on top of another, thus reducing the chances of causing peeling or misalignment between the plurality of all-solid-state batteries 35 that are stacked one on top of another. This may reduce the chances of causing deterioration in the electrical performance of the battery pack 30.

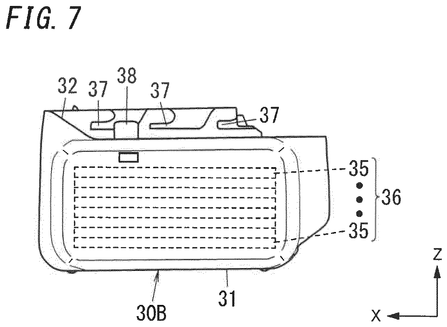

Also, in this battery pack 30, the number, area, and connection mode of the all-solid-state batteries 35 that form the power storage unit 36 may be changed as appropriate according to the voltage and capacity required. The voltage value of the power storage unit 36 depends on, for example, the voltage values of the respective all-solid-state batteries 35 and the number of the all-solid-state batteries 35 that are connected together in series. The capacity of the power storage unit 36 depends on, for example, the respective areas of the all-solid-state batteries 35 and the number of the all-solid-state batteries 35 that are connected together in parallel. For example, FIG. 7 is a side view of a battery pack 30B including a power storage unit 36 in which eight all-solid-state batteries 35 are connected together in series. In this battery pack 30B, a larger number of all-solid-state batteries 35 are connected together in series than in the battery pack 30 described above, and therefore, the voltage when the battery pack 30B is fully charged is set at a higher voltage than in the battery pack 30. Note that the number of the battery packs of different types does not have to be two. Rather, multiple different types of battery packs 30, of which respective voltage values and/or capacities are different from each other, are suitably prepared. In that case, one battery pack 30, selected from the multiple different types of battery packs 30, may be attached to the grip portion 20 (of the tool body 50). This allows the electric tool 1 to be used with a battery pack 30 with any desired voltage value or capacity attached to the grip portion 20.

Furthermore, each of the plurality of all-solid-state batteries 35 has a rectangular sheet shape. As shown in FIG. 6, the longitudinal axis of the plurality of all-solid-state batteries 35 is aligned with the orientation of the tool 40 attached to the tool attachment member 11 (i.e., the forward/backward direction in this embodiment). That is to say, the plurality of all-solid-state batteries 35 are arranged such that their longer side 35A is aligned with the X-axis direction and their shorter side 35B is aligned with the Y-axis direction. This enables reducing, compared to a situation where the plurality of all-solid-state batteries 35 are arranged such that their longer side 35A is perpendicular to the orientation of the tool 40 (i.e., the forward/backward direction), the width of the battery pack 30 as measured perpendicularly to the orientation of the tool 40 with the tool 40 pointed at the workpiece.

### (2.3) Method of use

The electric tool 1 according to this embodiment is made usable by attaching the battery pack 30 to the battery attachment portion 22 of the grip portion 20. Note that a tool 40 of the type suitable for the machining work that the user 100 is going to do is attached by the user 100 to the tool attachment member 11.

When the user 100 has not pulled the trigger 23 yet, the control unit 14 keeps the driving unit 12 deactivated and does not rotate the tool attachment member 11.

On the other hand, when the user 100 pulls the trigger 23, the control unit 14 starts driving the driving unit 12 in rotation, thereby turning the tool 40 attached to the tool attachment member 11. At this time, the control unit 14 controls, based on the manipulative variable of the operation of pulling the trigger 23, the rotational velocity of the driving unit 12 (i.e., the rotational velocity of the tool attachment member 11). This allows the user 100 to have any desired type of machining work done using the electric tool 1 by performing the operation of pulling the trigger 23.

### (3) Variations

In the exemplary embodiment described above, the respective weights of the body portion 10 and the battery pack 30 are set such that the center of mass of the electric tool 1 is located in the gripping part 21. Alternatively, the respective weights of the body portion 10 and the battery pack 30 may be set such that the battery pack 30 is heavier than the body portion 10.

If the battery pack 30 is heavier than the body portion 10, the center of mass of the electric tool 1 is located in a part, proximate to the battery pack 30, of the grip portion 20. The suspension fitting 25 is attached to the end portion 202, to which the battery pack 30 is attached, of the grip portion 20, thus allowing the electric tool 1 to be suspended from a position close to the center of mass of the electric tool 1. This may reduce, while the user 100 is moving or doing some type of work with the electric tool 1 suspended from the working belt 120, the chances of the electric tool 1 being shaken significantly around the suspension fitting 25. This may reduce the chances of the electric tool 1 suspended obstructing the user's 100 movement or doing some other type of work.

In addition, even if the suspension fitting 25 comes loose from the working belt 120 to let the electric tool 1 fall while the electric tool 1 is suspended from the working belt 120 as shown in FIG. 5, the electric tool 1 will hit the ground with the battery pack 30, which is heavier than the body portion 10, facing down. That is to say, the battery pack 30 of the electric tool 1 will hit the ground earlier than the body portion 10 thereof, thus allowing the battery pack 30 to receive the impact caused by the fall. This may reduce the impact applied to the driving unit 12 and the transmission unit 13. Consequently, this achieves the advantage of reducing the frequency of occurrence of failures caused in the driving unit 12 and the transmission unit 13.

In this case, the battery pack 30 may be made heavier than the body portion 10 by increasing the weight of the power storage unit 36 with the number of the all-solid-state batteries 35 included in the power storage unit 36 increased, for example. Alternatively, the battery pack 30 may be made heavier than the body portion 10 by reducing the weight of the body portion 10 with either the driving unit 12 or the transmission unit 13 made lighter in weight. In this embodiment (as well as its variations), the power storage unit 36 is made up of all-solid-state batteries 35, each of which is lighter in weight than a liquid battery such as a lithium-ion battery. The battery pack 30 may be made heavier than the body portion 10 by either increasing the number of the all-solid-state batteries 35 or increasing the size of each of the all-solid-state batteries 35.

In the exemplary embodiment and variations described above, the electric tool 1 includes the power storage unit 36 in which the plurality of all-solid-state batteries 35 are stacked one on top of another. Optionally, the plurality of all-solid-state batteries 35 may be kept in close contact with each other by applying pressure to those all-solid-state batteries 35 that are stacked one on top of another. Note that the plurality of all-solid-state batteries 35 do not have to be kept in contact with each other with pressure applied thereto but may be just stacked one on top of another.

Optionally, in the exemplary embodiment and variations described above, a buffer member made of synthetic rubber, for example, may be provided between the inner surface of the battery case 31, 31A and the power storage unit 36 to reduce the impact applied to the power storage unit 36.

Furthermore, in the exemplary embodiment and variations described above, the battery pack 30 may or may not be one of the constituent elements of the electric tool 1.

### (Recapitulation)

According to the claimed invention, the electric tool (1) may stand by itself in its entirety with a bottom surface (311) of the battery pack (30) put on a mounting surface (2). Thus, putting the electric tool (1) violently onto the mounting surface (2) with the battery pack (30) facing down could apply impact to the battery pack (30). In this configuration, the battery pack (30) includes all-solid-state batteries (35) with higher impact resistance than a liquid battery such as a lithium-ion battery. This may reduce, even if impact is applied to the battery pack (30), the chances of causing abnormality to the battery pack (30). Thus, an electric tool (1) that may reduce the chances of causing inconveniences to the battery pack (30) may be provided.

In an electric tool (1) according to a further aspect, which may be implemented in conjunction with the first aspect, a direction in which the plurality of all-solid-state batteries (35) are stacked one on top of another is aligned with a line segment that connects together the first end portion (201) and the second end portion (202), interposing the gripping part (21), of the grip portion (20).

This aspect reduces, even if external force is applied to the battery pack (30) in the direction aligned with the line segment that connects together the first and second end portions (201, 202) of the grip portion (20), the chances of causing peeling and/or misalignment between the respective layers of the plurality of all-solid-state batteries (35), thus reducing inconveniences to be caused in the battery pack (30).

In an electric tool (1) according to a further aspect, which may be implemented in conjunction with the first aspect, a direction in which the plurality of all-solid-state batteries (35) are stacked one on top of another is aligned with a direction perpendicular to the bottom surface (311) of the battery pack (30).

This aspect reduces, even if external force is applied to the battery pack (30) in the direction perpendicular to the bottom surface (311) of the battery pack (30), the chances of causing peeling and/or misalignment between the respective layers of the plurality of all-solid-state batteries (35), thus reducing inconveniences to be caused in the battery pack (30). In addition, this also reduces, even if the electric tool (1) is put violently on the mounting surface (2) with the battery pack (30) facing down, the chances of the impact applied to the battery pack (30) causing abnormality to the battery pack (30). Thus, an electric tool (1) that may reduce the chances of causing inconveniences to the battery pack (30) may be provided.

In an electric tool (1) according to a further aspect, which may be implemented in conjunction with any one of the first to third aspects, each of the plurality of all-solid-state batteries (35) has a rectangular sheet shape. A longitudinal axis of the plurality of all-solid-state batteries (35) is aligned with an orientation of the tool (40) attached to the tool attachment member (11).

This aspect may reduce the width of the battery pack (30) as measured perpendicularly to the orientation of the tool (40) pointed at the workpiece, compared to a situation where the latitudinal axis of the plurality of all-solid-state batteries (35) is aligned with the orientation of the tool (40).

In an electric tool (1) according to a further aspect, which may be implemented in conjunction with any one of the first to fourth aspects, multiple different types of battery packs (30), which have mutually different voltage values and/or capacities and one of which is battery pack (30), are provided. One battery pack (30) selected from the multiple different types of battery packs (30) is attached to the grip portion (20).

This aspect allows a battery pack (30) with a desired voltage value or capacity to be selectively used.

In an electric tool (1) according to a further aspect, which may be implemented in conjunction with any one of the first to fifth aspects, the battery pack (30) is attachable to, and removable from, the grip portion (20).

This aspect allows the battery pack (30) to be attached to the grip portion (20) provided for the body portion (10).

In an electric tool (1) according to a further aspect, which may be implemented in conjunction with the sixth aspect, the battery pack (30) is attached to the grip portion (20) by sliding the battery pack (30) in a slide direction aligned with the bottom surface (311) of the battery pack (30).

According to this aspect, when the user (100) holds the grip portion (20) such that the longitudinal axis of the grip portion (20) is aligned with the upward/downward direction, the slide direction of the battery pack (30) will be aligned with the direction perpendicular to the upward/downward direction (that is the direction of gravity). This reduces the risk of the gravitational force applied to the battery pack (30) causing the battery pack (30) to move in the slide direction, thus reducing the chances of the battery pack (30) disengaging itself from the grip portion (20).

A battery pack (30) according to a further aspect is designed for use in the electric tool (1) according to any one of the first to seventh aspects. The battery pack (30) includes a plurality of all-solid-state batteries (35), each of the plurality of all-solid-state batteries (35) being formed in a sheet shape, and the plurality of all-solid-state batteries (35) are stacked one on top of another. The battery pack (30) includes a battery case (31) to house the plurality of all-solid-state batteries (35) therein.

According to this aspect, the electric tool (1) in its entirety may stand by itself with a bottom surface (311) of the battery pack (30) put on a mounting surface (2). Thus, putting the electric tool (1) violently onto the mounting surface (2) with the battery pack (30) facing down could apply impact to the battery pack (30). In this configuration, the battery pack (30) includes all-solid-state batteries (35) with higher impact resistance than a liquid battery such as a lithium-ion battery. This may reduce, even if impact is applied to the battery pack (30), the chances of causing abnormality to the battery pack (30). Thus, a battery pack (30) that may reduce the chances of causing inconveniences to itself may be provided.

Note that the constituent elements according to the second to seventh aspects are not essential constituent elements for the electric tool (1) but may be omitted as appropriate.

### Reference Signs List

- 1: Electric Tool
- 2: Ground (Mounting Surface)
- 10: Body Portion
- 11: Tool Attachment Member
- 12: Driving Unit
- 13: Transmission Unit
- 20: Grip Portion
- 21: Part
- 30: Battery Pack
- 31: Battery Case
- 35: All-Solid-State Battery
- 40: Tool
- 100: User
- 110: Hand
- 201, 202: End Portion
- 311: Bottom Surface

## Claims

1. An electric tool (1) comprising:
a body portion (10) including: a tool attachment member (11) to which a tool (40) is attached; a driving unit (12) configured to drive the tool (40); and a transmission unit (13) configured to transmit driving force of the driving unit (12) to the tool (40);
a grip portion (20) including a gripping part designed to be held by a user with his or her hand; and
a battery pack (30) configured to supply power to the driving unit (12),
**characterized in that**:
the grip portion (20) includes: a first end portion (201); and a second end portion (202) located opposite from the first end portion (201) with respect to the gripping part (21), the body portion (10) being connected to the first end portion (201), the battery pack (30) being attached to the second end portion (202),
the electric tool (1) in its entirety, including the body portion (10), the grip portion (20), and the battery pack (30), is configured to stand by itself with a bottom surface (311), opposite from the grip portion (20), of the battery pack (30) put on a mounting surface, **characterised in that**
the battery pack (30) includes a plurality of all-solid-state batteries (35), each of the plurality of all-solid-state batteries (35) being formed in a sheet shape, and
the plurality of all-solid-state batteries (35) are stacked one on top of another, and wherein
a direction in which the plurality of all-solid-state batteries (35) are stacked one on top of another is aligned with a direction perpendicular to the bottom surface (311) of the battery pack (30).

2. The electric tool (1) of claim 1, wherein
each of the plurality of all-solid-state batteries (35) has a rectangular sheet shape, and
a longitudinal axis of the plurality of all-solid-state batteries (35) is aligned with an orientation of the tool (40) attached to the tool attachment member (11).

3. The electric tool (1) of any one of claims 1 or 2, wherein
multiple different types of battery packs (30), which have mutually different voltage values and/or capacities and one of which is battery pack (30), are provided, and
one battery pack (30) selected from the multiple different types of battery packs (30) is attached to the grip portion (20).

4. The electric tool (1) of any one of claims 1 to 3, wherein
The battery pack (30) is attachable to, and removable from, the grip portion (20).

5. The electric tool (1) of claim 4, wherein
the battery pack (30) is configured to be attached to the grip portion (20) by sliding the battery pack (30) in a slide direction aligned with the bottom surface (311) of the battery pack (30).

6. A battery pack (30) for use in the electric tool (1) of any one of claims 1 to 5,
the battery pack (30) having a bottom surface (311) opposite a mounting surface when attached to the electric tool (1), including a plurality of all-solid-state batteries (35), each of the plurality of all-solid-state batteries (35) being formed in a sheet shape,
the plurality of all-solid-state batteries (35) being stacked one on top of another, wherein a direction in which the plurality of all-solid-state batteries (35) are stacked one on top of another is aligned with a direction perpendicular to the bottom surface (311) of the battery pack (30), and
the battery pack (30) including a battery case configured to house the plurality of all-solid-state batteries (35) therein.

## Patentansprüche

1. Ein Elektrowerkzeug (1) das Folgendes umfasst:
einen Gehäuseabschnitt (10) mit: einem Werkzeugbefestigungselement (11), an dem ein Werkzeug (40) angebracht ist; einer Antriebseinheit (12), die konfiguriert ist, um das Werkzeug (40) anzutreiben; und einer Übertragungseinheit (13), die konfiguriert ist, um die Antriebskraft der Antriebseinheit (12) auf das Werkzeug (40) zu übertragen;
einen Griffabschnitt (20), der einen Greifbereich beinhaltet, der dazu ausgelegt ist, von einer Benutzerin oder einem Benutzer mit der Hand gehalten zu werden; und
ein Batteriepack (30), das konfiguriert ist, um die Antriebseinheit (12) mit Strom zu versorgen,
**dadurch gekennzeichnet, dass**
der Griffabschnitt (20) Folgendes beinhaltet: einen ersten Endabschnitt (201); und einen zweiten Endabschnitt (202), der in Bezug auf den Greifbereich (21) gegenüber dem ersten Endabschnitt (201) angeordnet ist, wobei der Gehäuseabschnitt (10) mit dem ersten Endabschnitt (201) verbunden ist, wobei das Batteriepack (30) am zweiten Endabschnitt (202) angebracht ist,
wobei das Elektrowerkzeug (1) in seiner Gesamtheit, einschließlich des Gehäuseabschnitts (10), des Griffabschnitts (20) und des Batteriepacks (30) konfiguriert ist, um selbstständig zu stehen, wobei eine dem Griffabschnitt (20) gegenüberliegende Bodenfläche (311) des Batteriepacks (30) auf einer Montagefläche aufliegt, **dadurch gekennzeichnet, dass**
das Batteriepack (30) eine Vielzahl von reinen Festkörperbatterien bzw. Festkörperbatterien (*all-solid-state batteries*) (35) beinhaltet, wobei jede der Vielzahl von Festkörperbatterien (35) in einer Platten- bzw. Blattform (sheet shape) ausgebildet ist, und wobei
die Vielzahl von Festkörperbatterien (35) übereinander gestapelt sind, und wobei
eine Richtung, in der die Vielzahl von Festkörperbatterien (35) übereinander gestapelt sind, mit einer Richtung ausgerichtet ist, die senkrecht zur Bodenfläche (311) des Batteriepacks (30) ist.

2. Das Elektrowerkzeug (1) nach Anspruch 1, wobei
jede der Vielzahl von Festkörperbatterien (35) eine rechteckige Blattform aufweist, und wobei
eine Längsachse der Vielzahl von Festkörperbatterien (35) mit einer Ausrichtung des am Werkzeugbefestigungselement (11) angebrachten Werkzeugs (40) ausgerichtet ist.

3. Das Elektrowerkzeug (1) nach irgendeinem der Ansprüche 1 oder 2, wobei
mehrere verschiedene Arten von Batteriepacks (30) vorgesehen sind, die voneinander unterschiedliche Spannungswerte und/oder Kapazitäten aufweisen und von denen eines das Batteriepack (30) ist, und wobei
ein Batteriepack (30), das aus den mehreren verschiedenen Arten von Batteriepacks (30) ausgewählt ist, am Griffabschnitt (20) angebracht ist.

4. Das Elektrowerkzeug (1) nach irgendeinem der Ansprüche von 1 bis 3, wobei
das Batteriepack (30) am Griffabschnitt (20) befestigbar und von diesem abnehmbar ist.

5. Das Elektrowerkzeug (1) nach Anspruch 4, wobei
das Batteriepack (30) konfiguriert ist, um am Griffabschnitt (20) angebracht zu werden, indem das Batteriepack (30) in einer Gleitrichtung verschoben wird, die mit der Bodenfläche (311) des Batteriepacks (30) ausgerichtet ist.

6. Ein Batteriepack (30) zur Verwendung im Elektrowerkzeug (1) nach irgendeinem der Ansprüche von 1 bis 5,
wobei das Batteriepack (30) eine Bodenfläche (311) gegenüber einer Montagefläche aufweist, wenn es am Elektrowerkzeug (1) befestigt ist,
eine Vielzahl von reinen Festkörperbatterien bzw. Festkörperbatterien (*all-solid-state batteries*) (35) beinhaltet, wobei jede der Vielzahl von Festkörperbatterien (35) in einer Platten- bzw. Blattform (*sheet shape*) ausgebildet ist,
wobei die Vielzahl von Festkörperbatterien (35) übereinander gestapelt sind, wobei eine Richtung, in der die Vielzahl von Festkörperbatterien (35) übereinander gestapelt sind, mit einer Richtung senkrecht zur Bodenfläche (311) des Batteriepacks (30) ausgerichtet ist, und wobei
das Batteriepack (30) ein Batteriegehäuse beinhaltet, das konfiguriert ist, um die Vielzahl von Festkörperbatterien (35) darin unterzubringen.

## Revendications

1. Un outil électrique (1) comprenant :
une portion de corps (10) incluant : un élément de fixation d'outil (11) auquel un outil (40) est fixé ; une unité d'entraînement (12) configurée pour entraîner l'outil (40) ; et une unité de transmission (13) configurée pour transmettre la force d'entraînement de l'unité d'entraînement (12) à l'outil (40) ;
une portion de poignée (20) incluant une partie de préhension conçue pour être tenue par la main d'un utilisateur ou d'une utilisatrice ; et
un bloc-batterie (30) configuré pour fournir de l'énergie à l'unité d'entraînement (12),
**caractérisé en ce que** :
la portion de poignée (20) inclut : une première portion d'extrémité (201) ; et une deuxième portion d'extrémité (202) située à l'opposé de la première portion d'extrémité (201) par rapport à la partie de préhension (21), la portion de corps (10) étant reliée à la première portion d'extrémité (201), le bloc-batterie (30) étant fixé à la deuxième portion d'extrémité (202),
l'outil électrique (1), incluant dans son ensemble la portion de corps (10), la portion de poignée (20) et le bloc-batterie (30), est configuré pour se tenir debout tout seul avec une surface inférieure (311), opposée à la portion de poignée (20), du bloc-batterie (30) posée sur une surface de montage, **caractérisé en ce que**
le bloc-batterie (30) inclut une pluralité de batteries tout solide (35), chacune des batteries tout solide (35) étant formée en une forme de feuille, et **que**
les batteries tout solide (35) sont empilées les unes sur les autres, et **que**
une direction dans laquelle la pluralité de batteries tout solide (35) sont empilées les unes sur les autres est alignée avec une direction perpendiculaire à la surface inférieure (311) du bloc-batterie (30).

2. L'outil électrique (1) d'après la revendication 1, sachant que
chacune de la pluralité de batteries tout solide (35) présente une forme de feuille rectangulaire, et que
un axe longitudinal de la pluralité de batteries tout solide (35) est aligné avec une orientation de l'outil (40) fixé à l'élément de fixation d'outil (11).

3. L'outil électrique (1) d'après l'une quelconque des revendications 1 ou 2, sachant que
plusieurs types différents de blocs-batteries (30), qui présentent des valeurs de tension et/ou des capacités mutuellement différentes et dont l'un est le bloc-batterie (30), sont prévus, et que
un bloc-batterie (30) sélectionné parmi les plusieurs types différents de blocs-batteries (30) est fixé à la portion de poignée (20).

4. L'outil électrique (1) d'après l'une quelconque des revendications de 1 à 3, sachant que
Le bloc-batterie (30) peut être fixé à la portion de poignée (20) et retiré de celle-ci.

5. L'outil électrique (1) d'après la revendication 4, sachant que le bloc-batterie (30) est configuré pour être fixé à la portion de poignée (20) en faisant coulisser le bloc-batterie (30) dans une direction de coulissement alignée avec la surface inférieure (311) du bloc-batterie (30).

6. Un bloc-batterie (30) destiné à être utilisé dans l'outil électrique (1) d'après l'une quelconque des revendications de 1 à 5,
le bloc-batterie (30) présentant une surface inférieure (311) opposée à une surface de montage lorsqu'il est fixé à l'outil électrique (1),
incluant une pluralité de batteries tout solide (35), chacune des batteries tout solide (35) étant formée en une forme de feuille,
les batteries tout solide (35) étant empilées les unes sur les autres, sachant qu'une direction dans laquelle la pluralité de batteries tout solide (35) sont empilées les unes sur les autres est alignée avec une direction perpendiculaire à la surface inférieure (311) du bloc-batterie (30), et
le bloc-batterie (30) incluant un boîtier de batterie configuré pour loger la pluralité de batteries tout solide (35) à l'intérieur.
